## Europäisches Patentamt
## European Patent Office
## Office européen des brevets

(19)

(11) Numéro de publication: **0 010 048**
**B1**

(12) # FASCICULE DE BREVET EUROPEEN

(45) Date de publication du fascicule du brevet:
20.07.83

(51) Int. Cl.³: **C 10 B 53/02,** C 10 B 49/08,
F 26 B 3/10, F 26 B 17/10

(21) Numéro de dépôt: **79400728.6**

(22) Date de dépôt: **10.10.79**

(54) **Procédé et appareil de gazéification au moins partielle de matières combustibles.**

(30) Priorité: **11.10.78 FR 7828963**

(43) Date de publication de la demande:
**16.04.80 Bulletin 80/8**

(45) Mention de la délivrance du brevet:
**20.07.83 Bulletin 83/29**

(84) Etats contractants désignés:
**CH DE GB IT NL SE**

(56) Documents cités:
**AU-D-588 866**
**FR-A-2 220 298**

(73) Titulaire: **CENTRE NATIONAL DU MACHINISME AGRICOLE, DU GENIE RURAL, DES EAUX ET DES FORETS (CEMAGREF), Parc de Tourvoie, F-92160 Antony (FR)**

(72) Inventeur: **Lucas, Jean Marie, 83, blvd Saint Michel, F-75005 Paris (FR)**
Inventeur: **Molle, Jean-François, 58, quai Pompadour, F-94600 Choisy-le-Roi (FR)**

(74) Mandataire: **Joly, Jean Jacques, CABINET BEAU DE LOMENIE 55, rue d'Amsterdam, F-75008 Paris (FR)**

EP 0 010 048 B1

ACTORUM AG

Procédé et appareil de gazéification au moins partielle de matières combustibles

La présente invention concerne un procédé et un appareil de gazéification au moins partielle par traitement thermique dans un courant de gaz chauds de matières combustibles fines, les termes «matières combustibles fines» recouvrant ici principalement les matières végétales et d'autres matières, par exemple les déchets urbains, ayant une granulométrie étendue allant de la poussière aux particules de quelques centimètres.

A titre d'exemples non limitatifs de matières végétales fines, on peut citer la paille grossièrement hachée, les coques de café et d'arachide, les rafles de maïs broyées, les balles de riz...

La légèreté et la diversité de granulométrie des matières végétales dont le traitement thermique est l'objet de la présente invention excluent l'utilisation de gazogènes connus à lit fixe ou à lit fluidisé.

La présente invention a alors pour but de fournir un procédé permettant de réaliser de façon uniforme la mise en suspension des matières végétales dans un courant de gaz chauds, afin d'effectuer un traitement thermique égal sur les différentes particules quelle que soit leur taille.

Ce but est atteint par un procédé selon lequel, conformément à l'invention, l'on introduit les matières combustibles à traiter dans une enceinte cylindrique à axe horizontal, l'on établit dans l'enceinte un courant de gaz chauds tournant autour de cet axe et l'on recycle une partie des gaz chauds produits pour entraîner les particules de matières à traiter et les mettre en suspension dans le courant de gaz chauds à proximité de la paroi périphérique de l'enceinte.

Les matières combustibles sont entraînées en ramenant les gaz recyclés à l'extérieur de l'enceinte et en les faisant passer à travers des orifices de la paroi périphérique de l'enceinte.

La présente invention a aussi pour but de fournir un dispositif permettant la mise en œuvre du procédé.

Ce but est atteint par un dispositif qui comporte, conformément à l'invention, une enceinte cylindrique qui forme un foyer cyclone d'axe horizontal, des moyens pour produire un courant de gaz chauds dans l'enceinte, une chambre de recyclage qui entoure l'enceinte, des orifices formés dans la paroi périphérique de l'enceinte séparant celle-ci de la chambre de recyclage, et un dispositif de recyclage alimentant la chambre de recyclage en gaz chauds prélevés dans l'enceinte de manière à entraîner les matières combustibles à traiter et à les mettre en suspension dans le courant de gaz chauds produit dans l'enceinte, à proximité de la paroi périphérique de l'enceinte, au moyen des gaz recyclés passant à travers les orifices de la paroi périphérique de l'enceinte.

L'utilisation d'un foyer cyclone d'axe horizontal et le recyclage de gaz chauds, non seulement permettent d'atteindre le but visé par la présente invention – mise en suspension uniforme dans un courant de gaz chauds de particules fines de taille les diverses – mais encore offrent des avantages très importants.

Ainsi, les gaz recyclés peuvent encore être utilisés pour refroidir les parties de paroi situées au niveau de chaque zone exposée aux gaz les plus chauds dans l'enceinte. Lorsque les gaz chauds atteignent une température relativement élevée (plus de 1000 °C), le refroidissement des parois exposées à ces températures par des gaz recyclés à une température d'environ 500 à 750 °C évite l'accumulation sur ces parois de particules collantes à une température supérieure.

Un autre avantage réside dans le fait que la reprise d'une partie des gaz chauds ralentit la progression dans l'enceinte des matières végétales entre l'entrée et la sortie. La gazéification peut alors, le cas échéant, être effectuée de façon complète sans que cela nécessite une enceinte de grande longueur. En outre, la mise en contact initial des matières végétales avec des gaz recyclés relativement chauds (500 à 750 °C) accélèrent le séchage et la carbonisation qui précèdent la gazéification des matières.

Avantageusement, le dispositif de traitement thermique de matières végétales fines comporte au moins un injecteur d'air de combustion qui débouche dans l'enceinte pour produire ledit courant de gaz chauds à proximité d'une, ou première, extrémité axiale de celle-ci, l'entrée des matières à traiter étant située à l'autre, ou seconde, extrémité axiale de l'enceinte et la sortie des produits résultant du traitement thermique des matières étant située à ladite première extrémité.

D'autres particularités et avantages du procédé et du dispositif conformes à l'invention ressortiront à la lecture de la description faite ci-après, à titre indicatif mais non limitatif, en référence aux dessins joints sur lesquels:

– la fig. 1 est une vue schématique en élévation et en coupe longitudinale médiane d'un mode de réalisation d'un dispositif de traitement thermique conforme à l'invention, et,

– les figs 2 à 4 sont des demi-vues en coupe transversales suivant respectivement les lignes II–II, III–III et IV–IV de la fig. 1.

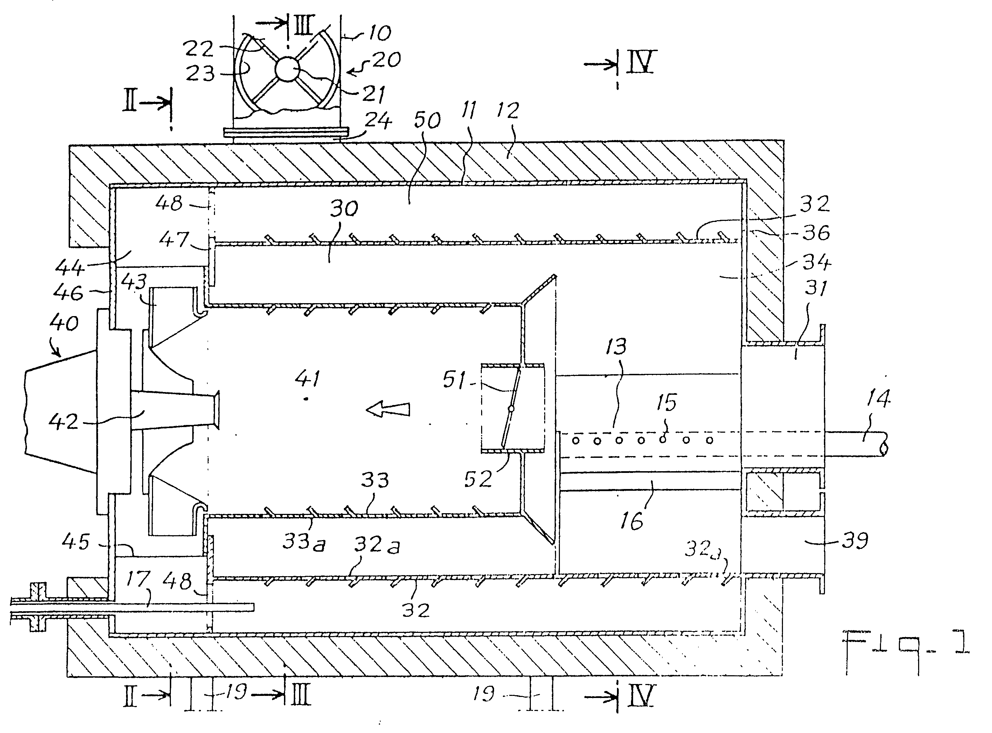

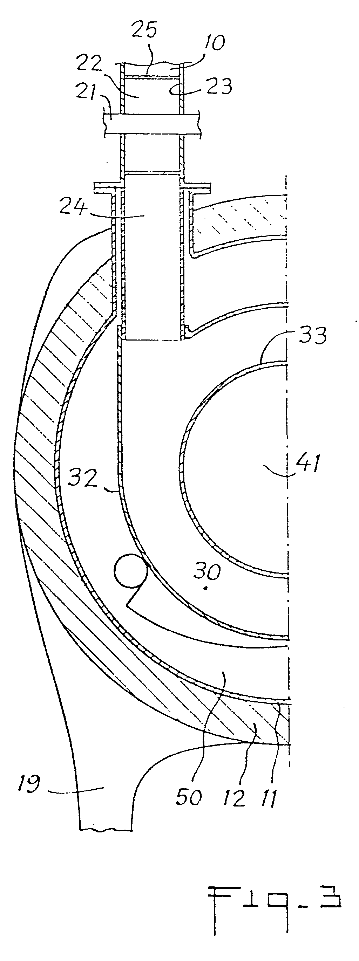

L'appareil représenté par les figs 1 à 4 est un gazogène destiné à la gazéification de matières végétales fines, par exemple de paille hachée. Bien entendu, comme indiqué plus haut, de nombreuses autres matières végétales fines sont susceptibles d'être traitées dans un appareil conforme à l'invention.

Le gazogène est alimenté en continu par de la paille hachée par un appareil (non représenté) qui envoie dans une goulotte 10 des particules de paille allant de la poussière aux brindilles de quelques centimètres, par exemple à plus de 5 centimètres.

Le gazogène comporte un dispositif 20 d'alimentation en paille hachée, une chambre de traitement 30 formant foyer cyclone d'axe horizontal, un dispositif de recyclage 40, une chambre de recyclage 50 entourant la chambre 30, et une enveloppe 11 en tôle recouverte à l'extérieur d'une couche 12 de matériau isolant thermique et entourant la chambre 50. Des pieds 19 supportent le gazogène.

Le dispositif d'alimentation 20 est, par exemple, du type écluse et comporte une roue 21 à palettes 22 (figs 1 et 3) qui tourne dans un logement 23. Le nombre de palettes 22 et leur espacement angulaire sont choisis pour qu'il n'y ait jamais communication directe entre une goulotte 10 et un passage 24 respectivement en amont et en aval du dispositif d'alimentation.

Les palettes 22 sont munies de lèvres 25 en caoutchouc le long de leurs bords pour éviter que la rotation de la roue soit gênée par des brindilles restant collées ou coincées contre la paroi du logement 23.

Le passage d'alimentation 24 débouche sensiblement tangentiellement dans la chambre de traitement 30 (fig. 3).

Les matières à gazéifier entrent dans la chambre 30 à la partie arrière de celle-ci (dans le sens du parcours des matières traitées) et les gaz produits sortent dans un passage de sortie axial 31 à l'avant de la chambre 30.

La chambre 30 est délimitée extérieurement par une enveloppe cylindrique en tôle 32 d'axe horizontal. Dans sa partie avant, la chambre 30 est un logement cylindrique creux 34 fermé à l'avant par une paroi frontale radiale 36 dans laquelle s'ouvre le passage de sortie 31.

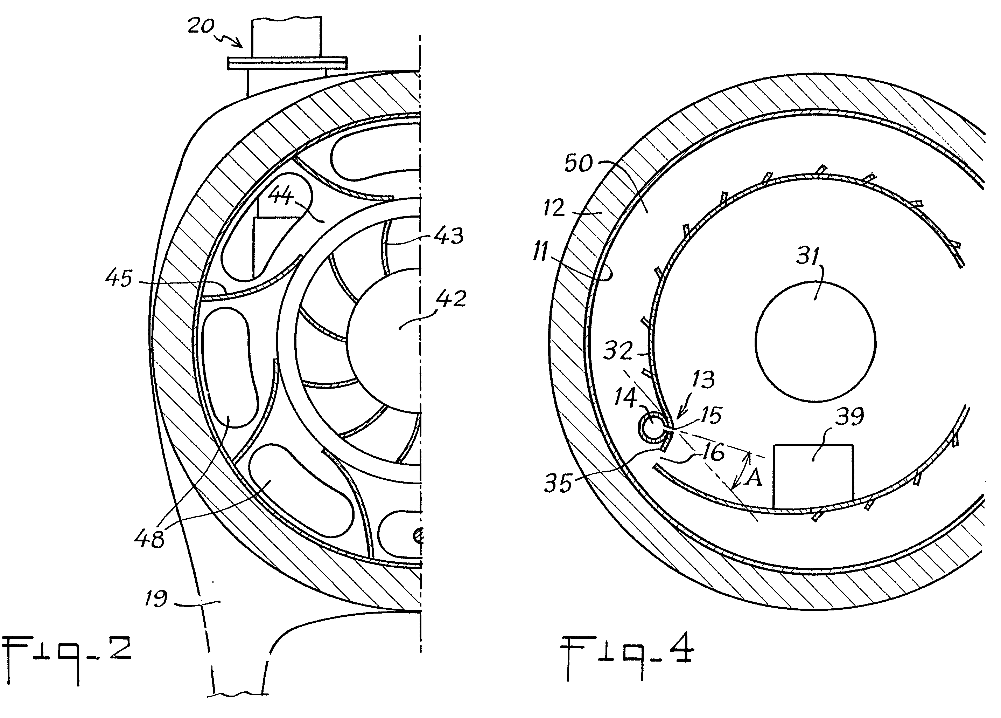

Les injecteurs d'air de combustion 13, un seul dans l'exemple illustré (figs 1 et 4), débouchent dans le logement 34. Chaque injecteur d'air 13 comporte un tube 14 tangent, selon une génératrice, au cylindre constituant la paroi périphérique de la chambre 34, et de même longueur. L'air sous pression injecté dans le tube 14 débouche presque tangentiellement dans la chambre 34 par une série d'orifices 15, disposés selon une génératrice de tube 14.

La paroi périphérique 32 du logement 34 subit après cette rangée d'orifices d'injection d'air un décrochement. Pour ce, elle s'enroule, en 35, sur le tube 14 (fig. 4). Une fente 16 est aménagée sous le tube 14 et laisse passer les gaz recyclés.

De plus, un angle A, par exemple d'environ 30°, est de préférence prévu entre l'axe de la sortie de chaque orifice de l'injecteur et la tangente à la paroi adjacente à cette sortie. Ainsi, la nappe de flammes produites par les divers orifices de l'injecteur n'est pas directement appliquée contre la paroi interne de la chambre au niveau de cette sortie. Cet angle de 30° ainsi que la fente 16 évitent un échauffement susceptible de porter la température de la paroi localement à une valeur telle que les cendres de produits deviendraient collantes et s'y accumuleraient.

A sa partie arrière, la chambre 30 contient un passage cylindrique axial 41 qui s'ouvre, à l'avant, dans le logement 34 à travers un conduit axial 52 muni d'un volet réglable 51. Le passage 41 est formé par une tôle cylindrique 33 qui délimite à l'arrière de la chambre 30, un logement annulaire dans la partie arrière duquel les matières combustibles à traiter sont introduites. La paroi 33 présente des orifices 33a (schématisés sur la ligne 1), formés par exemple par découpage d'écailles dans la tôle 33, qui font communiquer ce logement annulaire avec le conduit axial 41.

Le conduit 41 traverse la cloison arrière radiale 47 de la chambre 30. Un ventilateur aspirateur haute température est disposé axialement à l'extérieur de la chambre 30, à la sortie du conduit 41. Les pales 43 refoulent les gaz aspirés à travers le conduit 41 dans des passages 44 délimités longitudinalement par des pales fixes 45 réparties autour de l'axe des chambres 30 et 50. Les passages 44 sont délimités latéralement par une cloison radiale 46 à l'arrière du gazogène et par la cloison 47 formant la paroi arrière des chambres 30 et 50.

Des lumières 48 sont pratiquées dans la cloison 47 pour faire communiquer les passages 44 avec la chambre de recyclage 50. Des orifices 32a (schématisés sur la fig. 1) sont formés, par exemple, par découpage d'écailles, dans la paroi 32 et font communiquer la chambre de recyclage 50 avec la chambre de traitement 30. Les orifices 32a sont pratiqués dans la paroi 32, de manière que les gaz traversant ces orifices soient orientés vers l'avant du gazogène. Ils favorisent ainsi l'acheminement des matières à traiter.

Un mélange air-gaz combustible peut être amené dans le gazogène par une conduite 17 qui traverse la partie arrière du gazogène. La conduite 17 débouche parallèlement à l'axe de la chambre 30, à l'intérieur de l'enveloppe 11.

Le fonctionnement du gazogène est le suivant:

Au démarrage, la conduite 17 est alimentée en mélange gazeux combustible qui est enflammé. Les gaz chauds produits pénètrent dans la chambre de traitement à travers les orifices 32a. Quand cette chambre est chaude (700 °C), on introduit les matières combustibles. Elles subissent alors les réactions successives de séchage, carbonisation et gazéification.

Lorsque la réaction de gazéification a démarré, l'air introduit par les injecteurs 13 et le gaz combustible produit donnent naissance à une réaction de combustion. Les flammes s'établissent à l'avant de la chambre 30, au voisinage de sa paroi périphérique interne et tout autour de l'axe de la chambre. Un courant circulaire de gaz chauds est produit. L'alimentation en mélange combustible à travers la conduite 17 peut être interrompue et le gazogène fonctionne en régime normal.

Une partie des gaz chauds produits dans le logement 34 à une température d'environ 1000 à 1500 °C est reprise dans le conduit 41 à travers le passage 52, et est recyclée au moyen du ventilateur 42. Les gaz recyclés sont introduits dans la chambre 50 et passent à travers les orifices 32a. Les gaz recyclés assurent la progression des matières à traiter grâce à l'orientation vers la chambre 34 des jets de gaz recyclés passant à travers les orifices 32a et leur mise en suspension dans les gaz chauds à l'avant du gazogène.

Le phénomène de «ligne d'eau» participe aussi à la progression des matières à traiter. Elles tendent en effet à s'accumuler sous la goulotte d'alimentation 10. Cependant, les forces d'inertie de rotation tendent à égaliser la répartition des matières à traiter sur toute la longueur du cylindre constituant la paroi périphérique de la chambre 30. Elles créent un écoulement (phénomène de «ligne d'eau») de la zone arrière du gazogène (sous la goulotte d'alimentation 10) vers la zone avant (logement 34).

Des gaz sont aussi recyclés par passage de la chambre 30 dans le conduit 41 à travers les orifices 33a. Il s'agit alors de gaz à une température d'environ 500 à 750 °C, car ils ont été refroidis par la réaction endothermique de séchage et de carbonisation qui se produit sur les matières à traiter dans la partie arrière de la chambre 30. Dans cette zone, la progression des matières est ralentie par reprise de gaz à travers les orifices 33a.

Les matières à traiter subissent successivement un séchage, une carbonisation et une gazéification lors de leur progression dans la chambre 30. La gazéification nécessite une température d'environ 1000 à 1500 °C et se produit essentiellement dans le logement 34, tandis que le séchage et le début de décomposition ne nécessitent qu'une température de 500 à 750 °C.

Les gaz recyclés sont un mélange de gaz très chauds prélevés à travers le passage 52 et de gaz moins chauds prélevés à travers les orifices 33a. La progression des matières à traiter dépend de la proportion de gaz prélevés dans le logement 34. Si une faible quantité de gaz très chauds est prélevée, cette progression est lente, la température des gaz recyclés est peu élevée et le temps de séjour des matières à traiter dans la zone de gazéification est relativement long. Le débit de gaz à travers le conduit 52 est alors réglé en fonction du temps nécessaire à la gazéification, ce dernier variant suivant les matières à traiter. Le réglage peut être fait par ajustement de la position du volet 51. S'agissant d'un gazogène destiné à traiter des matières déterminées, le réglage peut être fait une fois pour toutes en choisissant une section de passage particulière à travers le conduit 52, et il n'est pas nécessaire de prévoir un volet 51.

Comme déjà indiqué, les gaz recyclés peuvent être utilisés non seulement pour assurer la progression et la mise en suspension des matières à traiter, mais aussi pour le refroidissement des parties de paroi soumises aux plus hautes températures. En effet, aux températures de 1000 à 1500 °C, les cendres de nombreux produits végétaux sont collantes et adhèrent aux parois les plus chaudes, empêchant le bon fonctionnement du foyer.

Le refroidissement des parois chaudes, notamment au niveau des injecteurs d'air, est réalisé par balayage au moyen des gaz recyclés à travers les ouvertures 16.

On notera encore que l'injection d'air par les injecteurs 13 étant réalisée juste avant la sortie des gaz résultant de la gazéification, elle provoque le cracking – et donc l'élimination – des goudrons véhiculés par ces gaz. De plus, la présence des orifices d'entrée d'air 15 dans la paroi périphérique de la chambre 34 crée une nappe de flammes que les particules, au cours de leur progression hélicoïdale de la goulotte d'alimentation 10 vers la sortie des gaz 31, sont obligées de traverser au moins une fois. Le passage dans cette nappe de flammes localement très chaude (1500 °C) autorise une gazéification complète et rapide de ces particules.

A titre d'exemple, on a pu faire fonctionner de façon satisfaisante un gazogène tel que décrit plus haut dans les conditions suivantes: alimentation en paille hachée à 10% d'humidité en quantité égale à 300 Kg/h, production de gaz chauds par fourniture de 450 Nm³/h d'air et recyclage de 6000 Nm³/h de gaz et production de 800 Nm³/h de gaz combustible (capacité calorifique de 1000 kcal/m³) (Nm³ représente le volume pour une température ramenée à 0 °C à la pression atmosphérique).

Dans ce qui précède, on a envisagé le cas d'un gazogène réalisant une gazéification complète.

Le procédé et l'appareil conformes à l'invention peuvent également être utilisés pour réaliser une gazéification incomplète des matières combustibles fines, afin de pouvoir récupérer des produits carbonisés non entièrement gazéifiés. La température des gaz chauds et le temps de séjour des matières dans la chambre de traitement sont déterminés selon le résultat visé.

Dans le cas de gazéification partielle, les produits de carbonisation solides obtenus sont recueillis à travers un conduit 39 situé à l'avant de la chambre 30, et à la partie inférieure de celle-ci. Ces produits peuvent ensuite être agglomérés pour obtenir un combustible comparable au charbon de bois.

## Revendications

1. Procédé de gazéification au moins partielle de matières combustibles fines par un traitement thermique comportant la mise en suspension des matières dans un courant de gaz chauds, caractérisé en ce que l'on introduit les matières à traiter dans une enceinte cylindrique à axe horizontal, l'on établit dans l'enceinte un courant de gaz chauds tournant autour de cet axe et l'on recycle une partie des gaz chauds produits pour entraîner les particules de matières à traiter et les mettre en suspension dans le courant de gaz chauds à proximité de la paroi périphérique de l'enceinte, de manière à traiter thermiquement de façon uniforme les matières fines de granulométrie étendue.

2. Procédé selon la revendication 1, caractérisé en ce que l'on met en suspension les matières à traiter en ramenant les gaz recyclés à l'extérieur de l'enceinte et en les faisant passer à travers des orifices de la paroi périphérique de l'enceinte.

3. Procédé selon l'une quelconque des revendications 1 et 2, caractérisé en ce que l'on refroidit les parties de paroi situées au niveau de chaque zone exposée aux gaz les plus chauds dans l'enceinte au moyen des gaz recyclés.

4. Procédé selon l'une quelconque des revendications 1 à 3, caractérisé en ce que l'on injecte de l'air de combustion dans l'enceinte à proximité de l'extrémité longitudinale de celle-ci où sortent les produits résultant du traitement thermique des matières.

5. Procédé selon l'une quelconque des revendications 1 à 4, caractérisé en ce que l'on extrait les gaz recyclés de l'enceinte par aspiration dans la partie axiale de l'enceinte.

6. Procédé selon l'une quelconque des revendications 1 à 4, caractérisé en ce que l'on recycle dans l'enceinte des gaz ayant une température comprise entre 500 et 750 °C.

7. Dispositif de gazéification au moins partielle de matières végétales fines, comprenant une enceinte, des moyens d'introduction de gaz chauds dans l'enceinte et un dispositif d'alimentation de l'enceinte en matières à traiter, dispositif caractérisé en ce que l'enceinte (30) est cylindrique et forme un foyer cyclone d'axe horizontal, et en ce qu'il comporte en outre des moyens (13) pour produire un courant de gaz chauds dans l'enceinte (30), une chambre de recyclage (50) qui entoure l'enceinte (30), des orifices (32a) formés dans la paroi périphérique (32) de l'enceinte (30) séparant celle-ci de la chambre de recyclage (50), et un dispositif de recyclage (40) alimentant la chambre de recyclage (50) en gaz chauds prélevés dans l'enceinte (30) de manière à entraîner les particules de matières à traiter et à les mettre en suspension dans le courant de gaz chauds produit dans l'enceinte (30), à proximité de la paroi périphérique (32) de l'enceinte (30), au moyen des gaz recyclés passant à travers les orifices (32a) de la paroi périphérique (32) de l'enceinte (30).

8. Dispositif selon la revendication 7, caractérisé en ce qu'il comporte au moins un injecteur (13) d'air de combustion qui débouche dans l'enceinte (30) pour produire ledit courant de gaz chauds, à proximité d'une, ou première, extrémité axiale de celle-ci, l'entrée (24) des matières à traiter étant située à l'autre, ou seconde, extrémité axiale de l'enceinte (30) et la sortie (31, 39) des produits résultant du traitement thermique des matières étant située à ladite première extrémité.

9. Dispositif selon la revendication 8, caractérisé en ce qu'au moins un passage (16) communiquant avec la chambre de recyclage (50) est formé à proximité du ou de chaque injecteur (13) pour refroidir les parties de paroi d'enceinte (30) de la ou des zones d'injection de gaz chauds au moyen des gaz recyclés.

10. Dispositif selon l'une quelconque des revendications 7 à 9, caractérisé en ce que le dispositif de recyclage (40) comporte des moyens (52, 33a, 41, 43) d'extraction de gaz chauds dans la zone centrale axiale de l'enceinte (30) et des moyens (43, 44, 48) de refoulement des gaz extraits dans la chambre de recyclage (50).

11. Dispositif selon l'une quelconque des revendications 7 à 10, caractérisé en ce qu'il comporte des moyens (51) de réglage du débit des gaz recyclés.

## Claims

1. Method for at least partly gasifying fine combustible materials by thermal treatment consisting in suspending said materials in a stream of hot gases, characterized in that the materials to be treated are introduced in a cylindrical enclosure of horizontal axis, a stream of hot gases in created in said enclosure said stream flowing around the said axis, and part of the hot gases produced is recycled in order to sweep along the particles to be treated and to place them in suspension in the stream of hot gases, close to the inside wall of the enclosure, so as to treat uniformly the fine materials of a widely varied granulometry.

2. Method according to claim 1, characterized in that the materials to be treated are placed in suspension by drawing back the recycled gases outside the enclosure and by sending them through orifices provided in the peripheral wall of the said enclosure.

3. Method according to claims 1 and 2, characterized in that the wall portions situated in each of the regions most exposed to the hottest gases inside the enclosure, are cooled by means of the recycled gases.

4. Method according to any one of claims 1 to 3, characterized in that the combustion air is injected into the enclosure in the vicinity of the longitudinal end thereof, which end serves as outlet for the products resulting from the thermal treatment of the materials.

5. Method according to any one of claims 1 to 4, characterized in that the recycled gases are recovered from the enclosure by suction in the axial part of the said enclosure.

6. Method according to any one of claims 1 to 4, characterized in that gases having a temperature varying between 500 and 750° are recycled in the enclosure.

7. Apparatus for at least partly gasifying fine vegetable materials, comprising an enclosure, means for introducing hot gases into the enclosure and a device for feeding the materials to be treated to the enclosure, apparatus characterized in that the enclosure (30) is cylindrical and forms a cyclonic furnace of horizontal axis, and in that said apparatus also comprises means (13) for producing a stream of hot gases inside the enclosure (30), a recycling chamber (50) surrounding said enclosure (30), orifices (32a) made in the peripheral wall (32) of said enclosure (30) separating the latter from the recycling chamber (50), and a recycling device (40) supplying said recycling chamber (50) with hot gases taken from the enclosure (30) so as to sweep along the combustible particles to be treated and to place these in suspension in the stream of hot gases created in the enclosure (30), close to the peripheral wall (32) of the enclosure (30), using the recycled gases flowing through the orifices (32a) of the peripheral wall (32) of the enclosure (30).

8. Apparatus according to claim 7, characterized in that it comprises at least one combustion air injector (13), issuing into the enclosure (30) to produce the said stream of hot gases adjacent one or the first axial end thereof, the inlet (24) for the materials to be treated being situated at the other or second axial end of the enclosure (30), the outlet (31, 39) for the products resulting from the thermal treatment of the materials being situated at the said first end.

9. Apparatus according to claim 8, characterized in that at least one passage (16) communicating with the recycling chamber (50) is provided adjacent the or each injector (13) in order to cool down the wall portions of the enclosure (30) situated in the regions where hot gases are injected, by means of recycled gases.

10. Apparatus according to any one of claims 7 to 9, characterized the recycling device (40) comprises means (52, 33a, 41, 43) for extracting the hot gases in the axial central area of the enclosure (30) and means (43, 44, 48) for delivering the gas thus extracted into the recycling chamber (50).

11. Apparatus according to any one of claims 7 to 10, characterized in that it comprises means (51) for controlling the flow of the recycled gases.

## Patentansprüche

1. Verfahren zur zumindest teilweisen Vergasung von feinen brennbaren Materialien durch eine Wärmebehandlung, bei der die Materialien in einem Strom heisser Gase suspendiert werden, dadurch gekennzeichnet, dass die zu behandelnden Materialien in ein zylindrisches Gehäuse mit horizontaler Achse eingebracht werden, im Gehäuse ein um diese Achse rotierender Strom heisser Gase gebildet wird und ein Teil der erzeugten heissen Gase zum Mitführen der zu behandelnden Materialien und zur Suspendierung derselben im Strom heisser Gase in der Nähe der peripheren Wandung des Gehäuses rückgeführt wird, so dass die feinen Materialien weitgestreuter Korngrösse einheitlich wärmebehandelt werden.

2. Verfahren nach Anspruch 1, dadurch gekennzeichnet, dass die zu behandelnden Materialien in Suspension gebracht werden, indem die rückgeführten Gase ausserhalb des Gehäuses rückgeführt und durch Öffnungen der peripheren Wandung des Gehäuses eingelassen werden.

3. Verfahren nach einem der Ansprüche 1 und 2, dadurch gekennzeichnet, dass die im Bereich der jeweils den heissesten Gasen im Gehäuse ausgesetzten Zone liegenden Wandungsteile mittels der rückgeführten Gase abgekühlt werden.

4. Verfahren nach einem der Ansprüche 1 bis 3, dadurch gekennzeichnet, dass in der Nähe des Längsendes des Gehäuses, bei dem die aus der Wärmebehandlung der Materialien resultierenden Produkte abgehen, Verbrennungsluft in das Gehäuse eingeleitet wird.

5. Verfahren nach einem der Ansprüche 1 bis 4, dadurch gekennzeichnet, dass die rückgeführten Gase des Gehäuses durch Ansaugen in den axialen Teil des Gehäuses abgezogen werden.

6. Verfahren nach einem der Ansprüche 1 bis 4, dadurch gekennzeichnet, dass Gase mit einer Temperatur zwischen 500 und 750°C in das Gehäuse rückgeführt werden.

7. Vorrichtung zur zumindest teilweisen Vergasung von feinen Pflanzenmaterialien, mit einem Gehäuse, Einrichtungen zur Einleitung heisser Gase in das Gehäuse und einer Einrichtung zur Speisung des Gehäuses mit zu behandelnden Materialien, dadurch gekennzeichnet, dass das Gehäuse (30) zylinderförmig ist und eine Zyklonfeuerung mit horizontaler Achse bildet, und dass sie weiters Einrichtungen (13) zur Erzeugung eines Stroms heisser Gase im Gehäuse (30), eine das Gehäuse (30) umgebende Rückführungskammer (50), in der peripheren, das Gehäuse (30) von der Rückführungskammer (50) trennenden Wandung (32) des Gehäuses (30) vorgesehene Öffnungen (32a) und eine Rückführungseinrichtung (40) umfasst, welche die Rückführungskammer (50) mit heissen, im Gehäuse (30) entnommenen Gasen speist, so dass die Teilchen der zu behandelnden Materialien mitgeführt und in dem im Gehäuse (30) in der Nähe der peripheren Wandung (32) des Gehäuses (30) mittels der durch die Öffnungen (32a) der peripheren Wandung (32) des Gehäuses (30) eindringenden, rückgeführten Gase erzeugten Strom heisser Gase in Suspension gebracht werden.

8. Vorrichtung nach Anspruch 7, dadurch gekennzeichnet, dass sie zumindest einen Verbrennungsluftinjektor (13) umfasst, der zur Erzeugung des Stroms heisser Gase in der Nähe eines bzw. des ersten axialen Endes des Gehäuses (30) in dieses mündet, wobei sich der Eingang (24) für die zu behandelnden Materialien am anderen bzw. zweiten axialen Ende des Gehäuses (30) und der Ausgang (31, 39) für die aus der Wärmebehandlung der Materialien resultierenden Produkte am ersten Ende befinden.

9. Vorrichtung nach Anspruch 8, dadurch gekennzeichnet, dass zumindest ein mit der Rückführungskammer (50) in Verbindung stehender Durchlass (16) in der Nähe des bzw. jedes Injektors (13) zur Kühlung der Wandungsteile des Gehäuses (30) der Einleitungszone(n) heisser Gase mittels der rückgeführten Gase ausgebildet ist.

10. Vorrichtung nach einem der Ansprüche 7 bis 9, dadurch gekennzeichnet, dass die Rückführungseinrichtung (40) Mittel (52, 33a, 41, 43) zum Abziehen heisser Gase im axialen Zentralbereich des Gehäuses (30) und Mittel (43, 44, 48) zur Rückförderung der abgezogenen Gase in der Rückführungskammer (50) umfasst.

11. Vorrichtung nach einem der Ansprüche 7 bis 10, dadurch gekennzeichnet, dass sie Einrichtungen (51) zur Regelung der Durchflussmenge der rückgeführten Gase umfasst.

Fig. 1

0 010 048

Fig-3

Fig-2

Fig-4